# FASCICULE DE BREVET EUROPEEN

(11) **EP 2 728 040 B1**
(45) Date de publication et mention de la délivrance du brevet: **27.11.2019**
(21) Numéro de dépôt: 13190145.6
(22) Date de dépôt: 24.10.2013
(51) Int. Cl.: C23C 24/08, A47J 36/04

(54) **Revêtement céramique aux propriétés de résistance à la rayure et de conduction thermique améliorées**
Keramische Verkleidung mit verbesserter Kratzfestigkeit und Wärmeleitfähigkeit
Ceramic coating with improved scratch resistance and heat conduction properties

(30) Priorité: 31.10.2012 FR 1260431
(43) Date de publication de la demande: 07.05.2014
(73) Titulaire: SEB S.A., 69130 Ecully (FR)
(72) Inventeur: PERILLON, Jean-Luc, 26130 SAINT PAUL TROIS CHATEAUX (FR); DUBANCHET, Aurélien, 73100 GRESY SUR AIX (FR); CAILLIER, Laurent, 74370 Pringy (FR)
(74) Mandataire: Regimbeau

(56) Documents cités:
- EP-A1- 0 810 301
- EP-A1- 1 469 045
- EP-A1- 2 141 138
- EP-A1- 2 206 801
- EP-A1- 2 412 846
- WO-A2-2010/043826
- US-A1- 2009 017 200

## Description

La présente invention concerne de manière générale un article comprenant un support métallique et au moins une couche d'un revêtement céramique appliqué sur ledit support métallique et obtenu par un procédé sol-gel permettant la production de matériaux vitreux sans recourir à la fusion, ledit article pouvant être un article culinaire, une semelle de fer à repasser, des plaques de fer à lisser les cheveux ou encore un capot d'un appareil ménager.

L'invention est aussi relative au procédé de fabrication dudit article.

Par revêtement céramique, on entend au sens de la présente invention, un revêtement synthétisé par voie sol-gel à partir d'une solution à base de précurseurs en phase liquide, qui se transforme en un solide par un ensemble de réactions chimiques (hydrolyse et condensation) à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxysilane (TEOS) avec une température de cuisson qui peut être inférieure à 400°C.

Ces revêtements céramiques ont actuellement un développement important dans le domaine des articles culinaires, et en particulier à titre de revêtements recouvrant la surface interne ou externe d'articles de cuisson. En outre, ils ont l'avantage de rendre possible l'obtention de revêtements colorés particulièrement résistants à la température, et présentant des propriétés de facilité de nettoyage.

De tels revêtements sont couramment obtenus en combinant des alcoxydes métalliques à base de silicium tels que les silanes, ou d'aluminium tels que les aluminates, et peuvent s'appliquer sur des substrats métalliques, tels que l'aluminium, la fonte d'aluminium ou l'acier inoxydable.

Toutefois, ces revêtements sol-gel présentent des propriétés de résistance mécanique limitées sur support métallique, et/ou ne permettent pas, de par leur caractère isolant thermique, une conduction thermique optimale. En effet, dans le cas par exemple d'articles de cuisson, une partie de l'énergie apportée audit article est dissipée dans le revêtement isolant au lieu d'être transmise directement à l'aliment à cuire. De plus, un revêtement sol-gel ne conduisant pas ou mal la chaleur, on observe la formation locale de points chauds au niveau de la zone en contact avec l'élément chauffant, qui sont défavorables à la qualité de la cuisson.

Or, il est primordial de pouvoir disposer de revêtements résistants thermiquement à plus de 200°C, qui conduisent la chaleur de manière homogène et efficace lors de leur utilisation finale, et qui de surcroit soient résistants mécaniquement aux agressions d'usage (rayures, abrasion ...).

Pour résoudre un tel problème, l'homme du métier envisagerait typiquement L'utilisation de charges métalliques classiques de taille micrométrique. Toutefois, ces charges présentent une densité élevée, ce qui rend leur mise en suspension difficile et génère un risque de décantation rapide dans une formulation les contenant.

La demanderesse a donc cherché à résoudre ce problème de densité en incorporant des charges qui présentent une faible masse volumique et une conductivité thermique élevée. Des particules de diamant ou de nitrure de bore cubique remplissent ces deux contraintes et leur utilisation dans des revêtements céramiques obtenus par voie sol-gel est connue de l'homme du métier.

Ainsi, le brevet américain US 6,939,908 enseigne l'utilisation, dans des revêtements céramiques transparents obtenus par voie sol-gel à partir d'un précurseur tel qu'un alcoxysilane, de particules résistantes à l'abrasion de type agrégats de diamètre compris entre 0,05 µm et 20 µm pour améliorer la résistance à la déformation du revêtement, ainsi que l'utilisation de nanoparticules céramiques, de diamètre inférieur à 0,1 µm, pour augmenter la transparence du revêtement. Il s'agit de revêtements transparents pour substrats plastiques destinés essentiellement à des applications de type ophtalmique, des vitres de véhicules automobiles, ou des cockpits d'avions De tels revêtements peuvent également s'appliquer sur des substrats métalliques afin d'améliorer leur dureté et leurs propriétés barrières à la corrosion.

Par ailleurs, la demande de brevet US 2011/0127461 décrit une composition thermo-conductrice obtenue par voie sol-gel, qui consiste en une matrice de polysiloxane dans laquelle sont dispersées des particules inorganiques, telles que des particules de nitrure de bore ou de diamant, de dimension comprise entre 0,003 et 50 µm, les particules et la matrice étant chimiquement liées. Du fait de leur conductibilité thermique élevée, les particules de diamant ou de CBN favorisent la transmission de la chaleur à l'intérieur de la matrice polysiloxane, plutôt isolante thermiquement.

La demande de brevet WO 2010/043826 A2 décrit quant à elle un revêtement céramique, destiné à être appliqué sur un support métallique et se présentant sous la forme d'un film continu ayant une épaisseur entre 10 et 80 pm, ledit revêtement comprenant une matrice comprenant au moins un polyalcoxyde métallique dans laquelle sont dispersées des particules d'un oxyde métallique, pouvant être choisi parmi les oxydes de silicium, d'aluminium, de cérium, de zinc, de vanadium et de zirconium, et préférentiellement de la silice colloïdale

Les revêtements sol-gel ont une épaisseur comprise entre 200 et 500 µm. Il s'agit de revêtements très épais destinés à être utilisés dans le domaine de l'électronique de puissance comme matériau d'étanchéité et de protection d'éléments semiconducteurs. Les propriétés de résistance mécanique ne sont pas recherchées dans ce type de revêtements.

En particulier, les teneurs élevées en particules nécessaires pour assurer la conduction thermique sous une forte épaisseur de revêtement génèrent un risque important d'écaillage, ce qui est acceptable pour une application en électronique peu sollicitée mécaniquement, mais qui est inacceptable dans le cas d'une application culinaire soumise à de constantes agressions mécaniques (impacts, abrasion, chocs répétés).

Cependant, les revêtements sol-gel enseignés par ces documents ne permettent pas de résoudre le problème technique de la présente invention, qui consiste à améliorer conjointement et de manière efficace la résistance mécanique d'un revêtement sol-gel de faible épaisseur (notamment inférieure à 100 nm) et son homogénéité thermique lors de son utilisation.

Pour résoudre ce problème, la Demanderesse a mis au point par voie sol-gel un revêtement céramique dans lequel des particules de faible masse volumique (inférieure à 3,9 g/cm³) tout en présentant de bonnes propriétés de conductivité thermique.

La présente invention a donc pour objet un article comprenant un support métallique et un revêtement céramique, appliqué sur ledit support métallique et se présentant sous la forme d'au moins un film continu ayant une épaisseur entre 2 et 100 pm, ledit revêtement comprenant une matrice comprenant au moins un polyalcoxyde métallique et dans laquelle sont dispersées des particules dont le diamètre est compris entre 0,01 et 50 µm, ces particules étant en un matériau présentant une conductivité thermique égale ou supérieure à 10 W.m⁻¹.K⁻¹ et une masse volumique d'au plus 3,9 g/cm³, lesdites particules étant dispersées dans la matrice sont choisies parmi les particules de diamant, les particules de nitrure de bore cubique ou CBN, les particules de type « *diamond like carbon* » ou DLC, les particules de carbure de silicium, les particules de carbure de bore, les particules de nitrure d'aluminium, les particules de nitrure de silicium, et leurs mélanges,
caractérisé en ce que la matrice comprend, en outre, au moins une huile de silicone, réactive ou non, choisie parmi les huiles chlorées, les huiles aminées, les huiles (méth)acrylées, les huiles hydroxylées, et les huiles avec terminaisons anhydrides, hydrures ou vinyles.

Avantageusement, le matériau constitutif des particules présente une dureté Mohs égale ou supérieure à 9, pour apporter un surcroit de dureté à la matrice du revêtement selon l'invention à base de polyalcoxylate métallique. Bien que des duretés élevées puissent être obtenues pour des revêtements sol-gel à base de polyalcoxylate métallique grâce à un choix judicieux de l'alcoxyde métallique (en utilisant par exemple des dérivés aluminiés au lieu de siliciés), la dureté maximale possible ne peut pas être atteinte car le processus réactionnel par voie sol-gel conduit préférentiellement à des composés amorphes, qui sont intrinsèquement de dureté plus faible que des composés cristallins. L'obtention de composés cristallins ne pourrait être acquise que si un processus de durcissement était réalisé à très haute température, ce qui est incompatible avec l'usage de certains supports métalliques et les contraintes environnementales et de productivité.

Les particules, qui peuvent être ou non d'une même espèce chimique, peuvent être de tailles identiques ou différentes. Il est ainsi rendu possible d'avoir des particules de natures chimiques différentes et de tailles différentes.

De manière avantageuse, le diamètre des particules est compris entre 0,05 et 20 µm, de préférence entre 0,1 et 5 µm et mieux entre 0,5 et 3 µm.

On entend par « *diamond like carbon* », abrégé DLC, au sens de l'invention, une structure amorphe avec des liaisons tétraédriques de même type que la structure du diamant.

Ces particules dispersées sont avantageusement présentes dans le revêtement selon l'invention à raison de 0,5 à 8 %, et de préférence à raison de 2 à 4 % en poids du revêtement.

Avantageusement, la matrice du revêtement céramique de l'article selon l'invention est formée à partir d'un polyalcoxylate métallique choisi parmi les polyalcoxysilanes, les
aluminates, les titanates, les zirconates, les vanadates, les borates, et leurs mélanges.

Le polyalcoxylate métallique de la matrice du revêtement céramique selon l'invention peut en outre comprendre au moins un groupement alkyle, non fonctionnalisé. Ce groupement alkyle peut être linéaire ou ramifié et choisi parmi les groupements alkyles en C₁, C₂, C₃ ou C₄, c'est-à-dire les groupements méthyle, éthyle et les alkyles comprenant 3 ou 4 atomes de carbone. La présence de groupements alkyles s'avère être particulièrement avantageuse pour améliorer l'hydrophobicité du revêtement selon l'invention, sans gêner toutefois la formation du réseau inorganique.

A titre d'exemples d'huiles silicones réactives disponibles dans le commerce, on peut notamment citer l'huile hydroxylée commercialisée par la société Wacker sous la dénomination OEL CT101M, ou l'huile vinylée commercialisée par la société BRB sous la dénomination vinyl fluid 100.

A titre d'huiles silicones non réactives utilisables dans le cadre de la présente invention, on peut notamment citer les phényl silicones, les méthyl-phényl silicones et les méthyl silicones.

Si le revêtement de l'article selon l'invention est destiné à une application culinaire, notamment pour être en contact avec des aliments, on optera de préférence pour une huile silicone choisie parmi les méthyl-phényl silicones et les huiles méthyl-silicones.

A titre d'exemples d'huiles méthyl-phényl silicones, on peut notamment citer les huiles commercialisées par la société WACKER sous la dénomination commerciale WACKER SILICONOL AP150 et par la société DOW CORNING sous la dénomination commerciale DOW CORNING 550 fluid, ainsi que les huiles commercialisées par la société WACKER AROO.

A titre d'exemples d'huiles méthyl-silicones, on peut notamment citer l'huile commercialisée par la société RHODIA sous la dénomination commerciale RHODIA 47 V 100, l'huile de la société DOW CORNING 200 fluid, ou encore l'huile de la société TEGO ZV 9207, qui sont des huiles méthyle silicones.

L'huile de silicone peut avantageusement présenter une viscosité dynamique à 20°C comprise entre 0,02 et 0,5 Pa.s.

Avantageusement, l'huile de silicone représente 0,01 à 2 % en poids dudit revêtement, avantageusement de 0,3 à 2 % en poids du poids total du revêtement.

La matrice du revêtement céramique de l'article selon l'invention peut comprendre, en outre, au moins une charge structurante et/ou au moins un pigment conférant de la couleur au revêtement.

Par charge structurante, on entend, au sens de la présente invention, une charge permettant d'améliorer l'aptitude du revêtement à former des couches d'épaisseur élevée (notamment supérieure à 2 µm).

A titre de charges structurantes utilisables dans le revêtement selon l'invention, on peut notamment citer :
(i) les oxydes métalliques tels que l'alumine, l'oxyde de zinc, l'oxyde de cuivre, l'oxyde de fer,
(ii) la silice,
(iii) la zircone,
(iv) le mica,
(v) les argiles tels que la montmorillonite, la sépiolite, la gypsite, la kaolinite et la laponite,
(vi) le dioxyde de zinc,
(vii) le quartz, et
(viii) le phosphate de zirconium,
ces charges se présentant sous forme de poudre ou de suspensions colloïdales.

De préférence, on utilisera, à titre de charges améliorant l'aptitude du revêtement selon l'invention à former des couches d'épaisseur élevée, des poudres ou des suspensions colloïdales d'alumine ou de silice.

A titre de pigments conformes à l'invention, on peut notamment citer le mica enrobé ou non, le dioxyde de titane, les oxydes mixtes de cuivre-chrome-manganèse, de cuivre-chrome, de chrome-antimoine-titane, d'étain-zinc-titane, les spinelles, les aluminosilicates, les oxydes de fer, le noir de carbone, le rouge de pérylène, les paillettes, les pigments interférentiels, les pigments thermochromes, les pigments magnétiques ou magnétisables, les sels de cobalt, le titanate de nickel et leurs mélanges.

De préférence, le film a une épaisseur comprise entre 5 et 70 µm de sorte que la pellicule ainsi formée est continue, cohérente et suffisante pour absorber la rugosité du support.

Sauf indication contraire, tous les pourcentages indiqués ci-dessus, relatifs aux composants du revêtement sont exprimés en pourcentage massique et expriment le pourcentage de composant par rapport au poids total du revêtement à l'état sec.

Avantageusement, l'article selon l'invention peut comprendre au moins deux couches de revêtement céramique selon l'invention, l'épaisseur totale desdites couches étant comprise entre 10 et 120 µm.

L'article selon l'invention peut être un article culinaire, ou une semelle de fer à repasser, ou des plaques de fers à lisser les cheveux, ou encore un capot d'un appareil ménager.

S'il s'agit d'un article culinaire, ce dernier comprendra typiquement un support métallique présentant une face intérieure pouvant recevoir des aliments et une face extérieure destinée à être disposée vers la source de chaleur, ledit revêtement étant appliqué sur l'une au moins des faces intérieure et extérieure.

A titre de supports métalliques utilisables dans le cadre de la présente invention pour des articles culinaires, on peut notamment citer les supports présentant :
- une structure monocouche en aluminium anodisé ou non, ou en aluminium poli, brossé ou microbillé, sablé, traité chimiquement, ou en fonte d'aluminium, ou en acier inoxydable poli, brossé ou microbillé, ou en fonte, ou en cuivre martelé ou poli ; ou
- une structure multicouches, en partie ou en totalité, comprenant de l'extérieur vers l'intérieur les couches suivantes acier inoxydable/aluminium/acier inoxydable ou encore acier inoxydable/aluminium/cuivre/aluminium/acier inoxydable, ou encore une calotte d'aluminium de fonderie, d'aluminium ou d'alliages d'aluminium doublée d'un fond extérieur en acier inoxydable.

Enfin, l'invention concerne aussi un procédé de fabrication d'un article selon l'invention, le dit procédé comprenant les étapes suivantes :
i) éventuellement, un traitement de surface dudit support métallique pour améliorer l'accrochage de la couche de sol gel appliquée à l'étape iv) ;
ii) préparation d'une composition sol-gel avec :
   - au moins un précurseur sol-gel choisi parmi les alcoxydes métalliques,
   - des particules ayant un diamètre compris entre 0,01 et 50 micromètres et étant en un matériau présentant une conductivité thermique égale ou supérieure à 10 W.111⁻¹.K⁻¹ et une masse volumique d'au plus 3,9 g/cm³, et de préférence une dureté Mohs égale ou supérieure à 9, et
   - (a) au moins une huile de silicone, réactive ou non, choisie parmi les huiles chlorées, les huiles aminées, les huiles (méth)acrylées, les huiles hydroxylées, et les huiles avec terminaisons anhydrides, hydrures ou vinyles et
   - éventuellement (b) au moins une charge structurante, et/ou
   - (c) au moins un pigment,
iii)hydrolyse dudit précurseur sol-gel par introduction d'eau et d'un catalyseur, acide ou basique, suivie d'une réaction de condensation partielle pour obtenir une composition sol-gel SG ;
iv) application sur ledit support métallique d'au moins une couche de ladite composition sol-gel SG obtenue à l'issue de l'étape iii) ;
v) éventuellement séchage de ladite couche à une température comprise entre 40 et 90°C ; et
vi) cuisson dudit article revêtu issu de l'étape iv) ou v) à une température comprise entre 150°C et 400°C.

Le support métallique sur lequel est appliqué le revêtement céramique selon l'invention est tel que défini précédemment.

Pour améliorer l'adhérence de la couche sol-gel sur un support métallique, notamment en aluminium, en acier inoxydable ou en fonte, l'homme du métier peut avantageusement réaliser un traitement de surface (i) de la surface du support métallique destinée à recevoir la couche sol-gel. Un tel traitement de surface peut par exemple consister en un traitement chimique (par exemple par décapage chimique) ou en un traitement mécanique (par exemple par brossage ou sablage), ou encore une combinaison de ces traitements. Ce traitement de surface peut être avantageusement suivi d'un éventuel dégraissage et/ou dépoussiérage.

En ce qui concerne l'étape ii) de préparation d'une composition sol-gel, celle-ci comprend principalement des particules d'un matériau présentant des propriétés physicochimiques spécifiques (conductivité thermique égale ou supérieure à 10 W.m⁻¹.K⁻¹ et masse volumique d'au plus 3,9 g/cm³), qui sont telles que définies précédemment, et au moins un précurseur sol-gel choisi parmi les alcoxydes métalliques.

On utilise de préférence, à titre de précurseur sol-gel, un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   R₁, R₂, R₃ ou R₃' désignant un groupement alkyle en C₁-C₄,
   R₂' désignant un groupement alkyle en C₁-C₄, ou phényle,
   n étant un nombre entier correspondant à la valence maximale des métaux M₁, M₂ ou M₃,
   M₁ M₂ ou M₃ désignant un métal choisi parmi Si, B, Zr, Ti, Al, V.

L'alcoxyde métallique peut donc être avantageusement choisi, par exemple, parmi les alcoxysilanes, les aluminates, les titanates, les zirconates, les vanadates, les borates et leurs mélanges.

On utilise de préférence un alcoxysilane à titre de précurseur sol-gel.

A titre d'alcoxysilanes conformes à l'invention, on peut notamment citer le méthyltriméthoxysilane (MTMS), le tétraéthoxysilane (TEOS), le méthyltriéthoxysilane (MYES), le diméthyldiméthoxysilane, et leurs mélanges.

De manière préférée, on utilisera les alcoxysilanes MIES et/ou TEOS, car ils présentent l'avantage de ne pas contenir de groupements méthoxy. En effet, l'hydrolyse des méthoxy conduit à la formation de méthanol dans la formulation sol-gel, ce qui compte tenu de son classement toxique nécessite des précautions supplémentaires lors de l'application. A contrario l'hydrolyse des groupements
éthoxy ne génère que de l'éthanol possédant un classement plus favorable et donc des prescriptions d'utilisations moins contraignantes pour le revêtement sol-gel.

La composition sol-gel préparée à l'étape (i) comprend en outre au moins une huile de silicone, réactive ou non, choisie parmi les huiles chlorées, les huiles aminées, les huiles (méth)acrylées, les huiles hydroxylées, et les huiles avec terminaisons anhydrides, hydrures ou vinyles et éventuellement au moins une charge pour améliorer les propriétés mécaniques du revêtement à former, et/ou au moins un pigment. L'huile de silicone, la charge pour améliorer les propriétés mécaniques du revêtement à former, et le pigment sont également tels que définis précédemment.

En ce qui concerne l'étape iii) d'hydrolyse du précurseur sol-gel, on utilise avantageusement, à titre de catalyseur un acide choisi parmi l'acide acétique, l'acide formique et l'acide chlorhydrique.

En ce qui concerne l'étape iv) d'application de la composition sol-gel sur la surface du support, celle-ci peut avantageusement être réalisée par pulvérisation. La couche de composition sol-gel SG appliquée à l'étape iv) peut avoir une épaisseur à l'état humide comprise entre 4 et 200 µm (ce qui correspond à une épaisseur comprise entre 2 et 100 µm après cuisson), avantageusement entre 10 et 140 µm (ce qui correspond à une épaisseur comprise entre 5 et 70 µm après cuisson), et l'étape (iv) peut être répétée jusqu'à obtenir une succession de couches dont l'épaisseur totale à l'état humide est comprise entre 20 et 240 µm (ce qui correspond à une épaisseur totale est comprise entre 10 et 120 µm après cuisson).

L'étape iv) d'application de la composition sol-gel peut être éventuellement suivie d'une étape de séchage à une température comprise entre 40°C et 90°C, précédant la cuisson finale vi) de l'article.

Par ailleurs, le procédé selon l'invention peut en outre comprendre une étape d'application d'une couche continue ou discontinue de décor, entre l'étape iv) d'application de la composition sol-gel (ou le cas échéant de séchage v)) et l'étape vi) de cuisson de l'article, cette application d'une couche de décor pouvant être elle-même suivie (ou non) d'une étape de séchage à une température inférieure à 90°C précédant la cuisson finale vi) de l'article.

Sauf indication contraire, tous les pourcentages de composants de la présente demande sont exprimés en pourcentages massiques. L'invention est illustrée plus en détail dans les exemples suivants.

### EXEMPLES

### Exemple 1 : Préparation d'un revêtement céramique à base de poudre de diamant selon l'invention

Le revêtement céramique est préparé sous la forme d'un bi-composant de compositions A et B.

La composition A permet d'amener la pigmentation, des additifs pour améliorer les qualités d'anti-adhérence du revêtement (facilité de nettoyage) ainsi que les charges permettant d'améliorer l'adhérence du revêtement et de jouer sur son aspect final. Cette composition A contient de la poudre de diamant.

La composition B comporte les silanes réactifs qui permettent de former la matrice du revêtement.

Le processus opératoire est le suivant :
1/ On prépare la composition A en introduisant successivement (en poids par rapport au poids total de ladite composition A) :
   - 40 % de silice colloïdale (i.e. Klebosol 40V12) ;
   - 15 % d'eau déminéralisée ;
   - 10 % d'isopropanol (destiné à améliorer la compatibilité des compositions A et B) ;
   - 2 % d'huile silicone non réactive (i.e. Rhodorsil 47V50) permettant d'améliorer les qualités d'anti-adhérence du revêtement ;
   - 30 % de pigment noir (i.e. FA1220) ; et
   - 3 % de poudre de diamant de diamètre moyen de 12 pm, par rapport en poids du film sec.
2/ On prépare la composition B en mélangeant du Méthyltriéthoxysilane avec de l'acide acétique, afin de limiter la réactivité du silane par création d'un chélate. La teneur en acide est de 5 % en poids par rapport au poids total de la composition B. Une teneur élevée est avantageuse si on veut augmenter la durée de vie dudit mélange.
   Ces deux compositions A et B peuvent se conserver plus de 6 mois sous cette forme séparée.
3/ On réunit alors dans un mélangeur les compositions A et B avec un ratio A/B de 50/50 en poids, pour créer un mélange intime et permettre la réaction d'hydrolyse. L'opération de brassage peut être rapide en elle-même, mais il est nécessaire de laisser mâturer au moins 24 heures ce mélange avant de l'appliquer comme revêtement. La durée de vie en pot de mélange est d'au moins 72 heures.
4/ Le mélange est filtré sur une grille en acier inoxydable de 40 µm.
5/ Le support en aluminium, se présentant sous la forme d'une poêle de 26 cm de diamètre, est traité mécaniquement par une opération de sablage, et dégraissé.
6/ Le mélange est appliqué au pistolet pneumatique sur une des deux faces dudit support obtenu à l'étape 5, en une couche de revêtement d'épaisseur de 30 ± 3 µm.
   Des épaisseurs plus importantes jusqu'à 100 ou 120 µm sont possibles en multipliant le nombre de couches, chaque couche étant séchée avant application de la suivante.
7/ La pièce ainsi revêtue est étuvée durant 30 minutes à la température de 220°C.

### Exemple 2 : Préparation d'un revêtement céramique à base de carbure de silicium SiC selon l'invention

Le revêtement céramique est préparé sous la forme d'un bi-composant de compositions A et B.

La composition A permet d'amener la pigmentation, des additifs pour améliorer les qualités d'anti-adhérence du revêtement (facilité de nettoyage) ainsi que les charges permettant d'améliorer l'adhérence du revêtement et de jouer sur son aspect final. La composition A comporte des particules de SiC. La composition B comporte les silanes réactifs qui permettent de former la matrice du revêtement.

Le processus opératoire est le suivant :
1/ On prépare la composition A en introduisant successivement (en poids par rapport au poids total de ladite composition A) :
   - 40 % de silice colloïdale (i.e. Klebosol 40V12) ;
   - 15 % d'eau déminéralisée ;
   - 10 % d'isopropanol (destiné à améliorer la compatibilité des compositions A et B) ;
   - 2 % d'huile silicone non réactive (i.e. Rhodorsil 47V50) permettant d'améliorer les qualités d'anti-adhérence du revêtement ;
   - 27 % de pigment noir (i.e. FA1220) ; et
   - 6 % de carbure de silicium de diamètre moyen de 5 pm, par rapport au poids du film sec.
2/ On prépare la composition B en mélangeant du Méthyltriéthoxysilane avec de l'acide acétique, afin de limiter la réactivité du silane par création d'un chélate. La teneur en acide est de 5 % en poids par rapport au poids total de la composition B. Une teneur élevée est avantageuse si on veut augmenter la durée de vie dudit mélange.
   Ces deux compositions A et B peuvent se conserver plus de 6 mois sous cette forme séparée.
3/ On réunit alors dans un mélangeur les compositions A et B avec un ratio A/B de 50/50 en poids, pour créer un mélange intime et permettre la réaction d'hydrolyse. L'opération de brassage peut être rapide en elle-même, mais il est nécessaire de laisser mâturer au moins 24 heures ce mélange avant de l'appliquer comme revêtement. La durée de vie en pot de mélange est d'au moins 72 heures.
4/ Le mélange est filtré sur une grille en acier inoxydable de 40 µm.
5/ Le support en aluminium, se présentant sous la forme d'une poêle de 26 cm de diamètre, est traité mécaniquement par une opération de sablage, et dégraissé.
6/ Le mélange est appliqué au pistolet pneumatique sur une des deux faces dudit support obtenu à l'étape 5, en une couche de revêtement d'épaisseur de 30 ± 3 µm.
   Des épaisseurs plus importantes jusqu'à 100 ou 120 µm sont possibles en multipliant le nombre de couches, chaque couche étant séchée avant application de la suivante.
7/ La pièce ainsi revêtue est étuvée durant 30 minutes à la température de 220°C.

### Exemple 3 : Préparation d'un revêtement céramique selon l'invention comportant des particules de Nitrure de Bore Cubique (CBN) :

Le revêtement céramique est préparé sous la forme d'un bi-composant de compositions A et B.

La composition A permet d'amener la pigmentation, des additifs pour améliorer les qualités d'anti-adhérence du revêtement (facilité de nettoyage) ainsi que les charges permettant d'améliorer l'adhérence du revêtement et de jouer sur son aspect final. La composition A comporte des particules de CBN. La composition B comporte les silanes réactifs qui permettent de former la matrice du revêtement.

Le processus opératoire est le suivant :
1/ On prépare la composition A en introduisant successivement (en poids par rapport au poids total de ladite composition A) :
   - 40 % de silice colloïdale (i.e. Klebosol 40V12) ;
   - 15 % d'eau déminéralisée ;
   - 10 % d'isopropanol (destiné à améliorer la compatibilité des compositions A et B) ;
   - 2 % d'huile silicone non réactive (i.e. Rhodorsil 47V50) permettant d'améliorer les qualités d'anti-adhérence du revêtement ;
   - 27 % de pigment noir (i.e. FA1220) ; et
   - 6 % de nitrure de bore cubique de diamètre moyen 2 µm, par rapport au poids du film sec.
2/ On prépare la composition B en mélangeant du méthyltriéthoxysilane avec de l'acide acétique, afin de limiter la réactivité du silane par création d'un chélate. La teneur en acide est de 5 % en poids par rapport au poids total de la composition B. Une teneur élevée est avantageuse si on veut augmenter la durée de vie dudit mélange.
   Ces deux compositions A et B peuvent se conserver plus de 6 mois sous cette forme séparée.
3/ On réunit alors dans un mélangeur les compositions A et B avec un ratio A/B de 50/50 en poids, pour créer un mélange intime et permettre la réaction d'hydrolyse. L'opération de brassage peut être rapide en elle-même, mais il est nécessaire de laisser mâturer au moins 24 heures ce mélange avant de l'appliquer comme revêtement. La durée de vie en pot de mélange est d'au moins 72 heures.
4/ Le mélange est filtré sur une grille en acier inoxydable de 40 µm.
5/ Le support en aluminium, se présentant sous la forme d'une poêle de 26 cm de diamètre, est traité mécaniquement par une opération de sablage, et dégraissé.
6/ Le mélange est appliqué au pistolet pneumatique sur une des deux faces dudit support obtenu à l'étape 5, en une couche de revêtement d'épaisseur de 30 ± 3 µm.
   Des épaisseurs plus importantes jusqu'à 100 ou 120 µm sont possibles en multipliant le nombre de couches, chaque couche étant séchée avant application de la suivante.
7/ La pièce ainsi revêtue est étuvée durant 30 minutes à la température de 220°C.

### Exemple comparatif 4 : Préparation d'un revêtement céramique non conforme à l'invention

1/ On prépare une composition A en introduisant successivement (en poids par rapport au poids total de ladite composition A) :
   - 40 % de silice colloïdale (i.e. Klebosol 40V12) ;
   - 15 % d'eau déminéralisée ;
   - 10 % d'isopropanol ;
   - 2 % d'huile silicone non réactive (i.e. Rhodorsil 47V50) ; et
   - 33 % de pigment noir (i.e. FA1220).
2/ On prépare séparément la composition B en mélangeant du Méthyltriéthoxysilane avec 5 % en poids d'acide acétique, par rapport au poids total de la composition B.
3/ On réunit alors dans un mélangeur les compositions A et B avec un ratio A/B de 50/50 en poids, et on laisse mâturer au moins 24 heures ce mélange avant de l'appliquer comme revêtement.
4/ Le mélange est filtré sur une grille inox de 40 micromètres.
5/ Le support en aluminium se présentant sous la forme d'une poêle de 26 cm de diamètre, est traité mécaniquement par une opération de sablage, et dégraissé.
6/ Le mélange est appliqué au pistolet pneumatique sur une des deux faces dudit support obtenu à l'étape 5, en une couche de revêtement d'épaisseur de 30 ± 3 µm.
7/ La pièce ainsi revêtue est étuvée durant 30 minutes à la température de 220°C.

### TESTS

### Evaluation de la résistance à la rayure

Description du test : A l'aide d'une pointe de diamant de 50 µm de diamètre, on applique une charge progressive sur le revêtement de l'exemple 1 et du comparatif 2, en augmentant la force appliquée de 0 à 4 Newtons. On observe ensuite la trace de la rayure par microscope optique. La valeur de délamination retenue pour le revêtement correspond à la force pour laquelle on observe une cassure nette du film jusqu'au métal. Les paramètres de vitesse d'augmentation de la charge et de vitesse de déplacement de la pointe sont maintenus constants pour tous les essais. Les résultats des essais de résistance à la rayure sont présentés dans le tableau 1 ci-dessous pour chacun des exemples 1 à 4 :

**Tableau 1**

| Exemples | Valeur moyenne de délamination |
|---|---|
| 1 (poudre de diamant selon l'invention) | 3,9 N |
| 2 (poudre de carbure de silicium selon l'invention) | 3,8 N |
| 3 (poudre de nitrure de bore cubique selon l'invention) | 3,9 N |
| 4 (exemple comparatif non conforme à l'invention) | 3,2 N |

La comparaison de chacun des exemples 1 à 3 avec l'exemple 4 montre que, grâce à la dureté de ces charges, on observe donc un gain de 15 à 20% sur les résultats du test de résultat de résistance à la rayure.

### Evaluation de la conduction thermique au sein des revêtements

Description du test : On mesure la différence de température entre le point le plus chaud et le point le plus froid d'une poêle de 26 cm de diamètre sur un bruleur gaz à l'aide d'une caméra thermique lorsque l'article arrive à une température proche de sa température de fonctionnement, c'est-à-dire à 180°C, au centre du support. Les résultats des essais d'évaluation de la conduction thermique sont présentés dans le tableau 2 ci-dessous pour chacun des exemples 1 à 4 :

**Tableau 2**

| Exemples | Différence entre le point le plus chaud et le plus Froid (poêle 26cm, centre à 180°C) |
|---|---|
| 1 | 9°C |
| 2 | 11°C |
| 3 | 9°C |
| 4 | 20°C |

La comparaison de chacun des exemples 1 à 3 avec l'exemple 4 montre que l'on obtient une application culinaire du revêtement nettement améliorée sans « points chauds » sur l'article avec un bon flux thermique. Par conséquent, le rendement énergétique est optimisé et le risque de dégradation des aliments limité.

## Revendications

1. Article comprenant un support métallique et un revêtement céramique appliqué sur ledit support métallique et se présentant sous la forme d'au moins un film continu ayant une épaisseur entre 2 et 100 pm, ledit revêtement comprenant une matrice comprenant au moins un polyalcoxyde métallique et dans laquelle sont dispersées des particules dont le diamètre est compris entre 0,01 et 50 pm, lesdites particules étant en un matériau présentant une conductivité thermique égale ou supérieure à 10 W.m⁻¹.K⁻¹ et une masse volumique d'au plus 3,9 g/cm³, lesdites particules étant dispersées dans la matrice sont choisies parmi les particules de diamant, les particules de nitrure de bore cubique ou CBN, les particules de type « *diamond like carbon* » ou DLC, les particules de carbure de silicium, les particules de carbure de bore, les particules de nitrure d'aluminium, les particules de nitrure de silicium, et leurs mélanges,
**caractérisé en ce que** la matrice comprend, en outre, au moins une huile de silicone, réactive ou non, choisie parmi les huiles chlorées, les huiles aminées, les huiles (méth)acrylées, les huiles hydroxylées, et les huiles avec terminaisons anhydrides, hydrures ou vinyles.

2. Article selon la revendication 1, dans lequel le matériau constitutif desdites particules présente une dureté Mohs égale ou supérieure à 9.

3. Article selon l'une quelconque des revendications 1 ou 2, dans lequel le polyalcoxylate métallique est choisi parmi les polyalcoxysilanes, les aluminates, les titanates, les zirconates, les vanadates, les borates, et leurs mélanges, ledit polyalcoxylate métallique pouvant en outre comprendre au moins un groupement alkyle, non fonctionnalisé.

4. Article selon l'une quelconque des revendications 1 à 3, dans lequel le film continu a une épaisseur entre 5 et 70 µm.

5. Article selon l'une des revendications 1 à 4, dans lequel le diamètre desdites particules est compris entre 0,05 et 20 pm, avantageusement entre 0,1 et 5 pm, mieux encore entre 0,5 et 3 µm.

6. Article selon l'une des revendications 1 à 5, dans lequel les particules dispersées représentent 0,5 à 8% en poids dudit revêtement, avantageusement entre 2 et 4% en poids du poids total du revêtement.

7. Article selon l'une quelconque des revendications 1 à 6, dans lequel l'huile de silicone représente 0,01 à 2% en poids dudit revêtement, avantageusement de 0,3 à 2% en poids du poids total du revêtement.

8. Article selon l'une quelconque des revendications 1 à 7, dans lequel l'huile de silicone présente une viscosité dynamique à 20°C de 0,02 à 0,5 Pa.s.

9. Article selon l'une quelconque des revendications 1 à 8, dans lequel la matrice comprend, en outre, au moins une charge structurante et/ou au moins un pigment.

10. Article selon la revendication 9, dans lequel le pigment est choisi parmi le mica enrobé ou non, le dioxyde de titane, les oxydes mixtes de cuivre-chrome-manganèse, de cuivre-chrome, de chrome-antimoine-titane, d'étain-zinc-titane, les spinelles, les aluminosilicates, les oxydes de fer, le noir de carbone, le rouge de pérylène, les paillettes, les pigments interférentiels, les pigments thermochromes, les pigments magnétiques ou magnétisables, les sels de cobalt, le titanate de nickel et leurs mélanges.

11. Article selon la revendication 9, dans lequel la charge structurante est choisie parmi :
(i) les oxydes métalliques tels que l'alumine, l'oxyde de zinc, l'oxyde de cuivre, l'oxyde de fer,
(ii) la silice,
(iii) la zircone,
(iv) le mica,
(v) les argiles tels que la montmorillonite, la sépiolite, la gypsite, la kaolinite et la laponite,
(vi) le dioxyde de zinc,
(vii) le quartz, et
(viii) le phosphate de zirconium,
ces charges se présentant sous forme de poudre ou de suspensions colloïdales.

12. Article selon la revendication 11, dans lequel la charge structurante est une poudre ou une suspension colloïdale d'alumine ou de silice.

13. Article selon l'une quelconque des revendications 1 à 12, comprenant au moins deux couches dudit revêtement l'épaisseur totale desdites couches étant comprise entre 10 et 120 µm.

14. Article selon l'une quelconque des revendications 1 à 13, qui est un article culinaire, ou une semelle de fer à repasser, ou des plaques de fers à lisser les cheveux, ou encore un capot d'un appareil ménager.

15. Article selon la revendication 14, qui est un article culinaire comprenant un support métallique présentant une face intérieure pouvant recevoir des aliments et une face extérieure destinée à être disposée vers la source de chaleur, et dans lequel ledit revêtement est appliqué sur l'une au moins desdites faces intérieure et extérieure.

16. Article selon l'une quelconque des revendications 1 à 15, dans lequel le support est :
- une structure monocouche en aluminium anodisé ou non, ou en aluminium poli, brossé ou microbillé, sablé, traité chimiquement, ou en fonte d'aluminium, ou en acier inoxydable poli, brossé ou microbillé, ou en fonte, ou en cuivre martelé ou poli ; ou
- une structure multicouches, en partie ou en totalité, comprenant de l'extérieur vers l'intérieur les couches suivantes acier inoxydable/aluminium/acier inoxydable ou encore acier inoxydable/aluminium/cuivre/aluminium/acier inoxydable, ou encore une calotte d'aluminium de fonderie, d'aluminium ou d'alliages d'aluminium doublée d'un fond extérieur en acier inoxydable.

17. Procédé de fabrication d'un article selon l'une quelconque des revendications 1 à 16, le dit procédé comprenant les étapes suivantes :
i) éventuellement, un traitement de surface dudit support métallique pour améliorer l'accrochage de la couche de sol gel appliquée à l'étape iv);
ii) préparation d'une composition sol-gel avec :
- au moins un précurseur sol-gel choisi parmi les alcoxydes métalliques,
- au moins des particules ayant un diamètre compris entre 0,01 et 50 µm et étant en un matériau présentant une conductivité thermique égale ou supérieure à 10 W.m⁻¹.K⁻¹ et une masse volumique d'au plus 3,9 g/cm³, et de préférence une dureté Mohs égale ou supérieure à 9, lesdites particules étant dispersées dans la matrice sont choisies parmi les particules de diamant, les particules de nitrure de bore cubique ou CBN, les particules de type « *diamond like carbon* » ou DLC, les particules de carbure de silicium, les particules de carbure de bore, les particules de nitrure d'aluminium, les particules de nitrure de silicium, et leurs mélanges,
- (a) au moins une huile de silicone, réactive ou non, choisie parmi les huiles chlorées, les huiles aminées, les huiles (méth)acrylées, les huiles hydroxylées, et les huiles avec terminaisons anhydrides, hydrures ou vinyles et
- éventuellement (b) au moins une charge structurante et/ou (c) au moins un pigment;
iii) hydrolyse dudit précurseur sol-gel par introduction d'eau et d'un catalyseur, acide ou basique, suivie d'une réaction de condensation partielle pour obtenir une composition sol-gel SG ;
iv)application sur ledit support métallique d'au moins une couche de ladite composition sol-gel SG obtenue à l'issue de l'étape iii);
v) éventuellement séchage de ladite couche à une température comprise entre 40 et 90°C; et
vi) cuisson dudit article revêtu issu de l'étape iv) ou v) à une température comprise entre 150°C et 400°C.

18. Procédé selon la revendication 17 dans lequel la couche de composition sol-gel SG appliquée à l'étape iv) a une épaisseur à l'état humide comprise entre 4 et 200 µm, avantageusement entre 10 et 140 µm et/ou dans lequel l'étape (iv) est répétée jusqu'à obtenir une succession de couches dont l'épaisseur totale à l'état humide est de 20 à 240 µm.

19. Procédé selon la revendication 17 ou 18, qui comprend en outre une étape d'application d'une couche continue ou discontinue de décor, entre l'étape iv) d'application de la composition sol-gel ou, le cas échéant, de séchage v), et l'étape vi) de cuisson de l'article, cette application d'une couche de décor pouvant être suivie d'une étape de séchage à une température inférieure à 90°C précédant la cuisson finale vi) de l'article.

## Patentansprüche

1. Artikel, umfassend einen metallischen Träger und eine keramische Beschichtung, die auf den metallischen Träger aufgetragen ist und in Form von mindestens einer durchgehenden Folie mit einer Stärke zwischen 2 und 100 µm vorliegt, wobei die Beschichtung eine Matrix umfasst, umfassend mindestens ein metallisches Polyalcoxyd, und in welcher Partikel verteilt sind, deren Durchmesser zwischen 0,01 und 50 µm liegt, wobei die Partikel aus einem Material sind, das eine Wärmeleitfähigkeit von gleich oder über 10 W.m⁻¹.K⁻¹ und eine Dichte von höchstens 3,9 g/cm³ hat, wobei die Partikel, die in der Matrix verteilt sind, aus den Diamantpartikeln, den kubischen Bornitridpartikeln oder CBN, den Partikeln vom Typ "diamond like carbon" oder DLC, den Siliciumcarbidpartikeln, den Borcarbidpartikeln, den Aluminiumnitridpartikeln, den Siliciumnitridpartikeln und ihren Gemischen ausgewählt sind,
**dadurch gekennzeichnet, dass** die Matrix ferner mindestens ein reaktives oder nicht reaktives Silikonöl umfasst, ausgewählt aus den chlorierten Ölen, den aminierten Ölen, den (Meth)acrylölen, den hydroxylierten Ölen und den Ölen mit Anhydrid-, Hydrid- oder Vinylendungen.

2. Artikel nach Anspruch 1, wobei das Material, aus dem die Partikel bestehen, eine Mohs-Härte von gleich oder über 9 aufweist.

3. Artikel nach einem der Ansprüche 1 oder 2, wobei das metallische Polyalcoxylat aus den Polyalcoxysilanen, den Aluminaten, den Titanaten, den Zirconaten, den Vanadaten, den Boraten und ihren Gemischen ausgewählt ist, wobei das metallische Polyalcoxylat ferner mindestens eine nicht funktionalisierte Alkylgruppe umfassen kann.

4. Artikel nach einem der Ansprüche 1 bis 3, wobei die durchgehende Folie eine Stärke zwischen 5 und 70 µm hat.

5. Artikel nach einem der Ansprüche 1 bis 4, wobei der Durchmesser der Partikel zwischen 0,05 und 20 pm, in vorteilhafter Weise zwischen 0,1 und 5 pm, noch besser zwischen 0,5 und 3 µm liegt.

6. Artikel nach einem der Ansprüche 1 bis 5, wobei die verteilten Partikel 0,5 bis 8 Gew.-% der Beschichtung, in vorteilhafter Weise zwischen 2 und 4 Gew.-% des Gesamtgewichts der Beschichtung, darstellen.

7. Artikel nach einem der Ansprüche 1 bis 6, wobei das Silikonöl 0,01 bis 2 Gew.-% der Beschichtung, in vorteilhafter Weise von 0,3 bis 2 Gew.-% des Gesamtgewichts der Beschichtung, darstellt.

8. Artikel nach einem der Ansprüche 1 bis 7, wobei das Silikonöl eine dynamische Viskosität bei 20 °C von 0,02 bis 0,5 Pa.s aufweist.

9. Artikel nach einem der Ansprüche 1 bis 8, wobei die Matrix ferner mindestens einen strukturierenden Zuschlag und/oder mindestens ein Pigment umfasst.

10. Artikel nach Anspruch 9, wobei das Pigment aus dem überzogenen oder nicht überzogenen Glimmer, dem Titandioxid, den Kupfer-Chrom-Mangan-, Kupfer-Chrom, Chrom-Antimon-Titan , Zinn-Zink-Titan-Mischoxiden, den Spinellen, den Aluminosilikaten, den Eisenoxiden, dem Carbonschwarz, dem Perylenrot, den Pailletten, den Interferenzpigmenten, den thermochromen Pigmenten, den magnetischen oder magnetisierbaren Pigmenten, den Cobaltsalzen, dem Nickeltitanat und ihren Gemischen ausgewählt ist.

11. Artikel nach Anspruch 9, wobei der strukturierende Zuschlag ausgewählt ist aus:
(i) den Metalloxiden wie dem Aluminumoxid, dem Zinkoxid, dem Kupferoxid, dem Eisenoxid,
(ii) dem Siliciumoxid,
(iii) dem Zirkon,
(iv) dem Glimmer,
(v) den Tonerden wie dem Montmorillonit, dem Sepiolit, dem Gypsit, dem Kaolinit und dem Laponit,
(vi) dem Zinkdioxid,
(vii) dem Quarz und
(viii) dem Zirkoniumphosphat,
wobei diese Zuschläge in Form von Pulver oder von kolloidalen Suspensionen vorliegen.

12. Artikel nach Anspruch 11, wobei der strukturierende Zuschlag ein Pulver oder eine kolloidale Aluminium- oder Siliciumoxidsuspension ist.

13. Artikel nach einem der Ansprüche 1 bis 12, umfassend mindestens zwei Schichten der Beschichtung, wobei die Gesamtstärke der Schichten zwischen 10 und 120 µm liegt.

14. Artikel nach einem der Ansprüche 1 bis 13, der ein Kulinarikartikel oder eine Bügeleisensohle oder Platten von Haarglätteisen oder auch eine Abdeckung eines Haushaltsgeräts ist.

15. Artikel nach Anspruch 14, der ein Kulinarkartikel ist, umfassend einen metallischen Träger, aufweisend eine Innenseite, welche Lebensmittel aufnehmen kann, und eine Außenseite, die bestimmt ist, in Richtung der Wärmequelle angeordnet zu sein, und wobei die Beschichtung auf mindestens eine der Innen- und Außenseite aufgetragen ist.

16. Artikel nach einem der Ansprüche 1 bis 15, wobei der Träger ist:
- eine einschichtige Struktur aus anodisiertem oder nicht anodisiertem Aluminium oder aus poliertem, gebürstetem oder perlengestrahltem, sandgestrahltem, chemisch behandeltem Aluminium oder aus Aluminiumguss oder aus poliertem, gebürstetem oder perlengestrahltem rostfreiem Stahl oder aus Guss oder aus gehämmertem oder poliertem Kupfer; oder
- eine mehrschichtige Struktur, teilweise oder insgesamt, umfassend von außen nach innen die folgenden Schichten rostfreier Stahl/Aluminium/rostfreier Stahl oder auch rostfreier Stahl/Aluminium/Kupfer/Aluminium/rostfreier Stahl oder auch eine Kalotte aus Aluminiumguss, Aluminium oder Aluminiumlegierungen, gedoppelt mit einem äußeren Boden aus rostfreiem Stahl.

17. Verfahren zur Herstellung eines Artikels nach einem der Ansprüche 1 bis 16, wobei das Verfahren die folgenden Schritte umfasst:
i) eventuell eine Oberflächenbearbeitung des metallischen Trägers zur Verbesserung der Haftung der in Schritt iv) aufgetragenen Sol-Gel-Schicht;
ii) Zubereitung einer Sol-Gel-Zusammensetzung mit:
- mindestens einem Sol-Gel-Vorläufer, ausgewählt aus den metallischen Alcoxiden,
- mindestens Partikeln, die einen Durchmesser haben, der zwischen 0,01 und 50 µm liegt und aus einem Material sind, das eine Wärmeleitfähigkeit von gleich oder über 10 W.m⁻¹.K⁻¹ und eine Dichte von höchstens 3,9 g/cm³ und vorzugsweise eine Mohs-Härte von gleich oder über 9 aufweist, wobei die Partikel, die in der Matrix verteilt sind, aus den Diamantpartikeln, den kubischen Bornitridpartikeln oder CBN, den Partikeln vom Typ "diamond like carbon" oder DLC, den Siliciumcarbidpartikeln, den Borcarbidpartikeln, den Aluminiumnitridpartikeln, den Siliciumnitridpartikeln und ihren Gemischen ausgewählt sind,
- (a) mindestens einem reaktiven oder nicht reaktiven Silikonöl, ausgewählt aus den chlorierten Ölen, den aminierten Ölen, den (Meth)acrylölen, den hydroxylierten Ölen und den Ölen mit Anhydrid-, Hydrid- oder Vinylendungen und
- eventuell (b) mindestens einem strukturierenden Zuschlag und/oder (c) mindestens einem Pigment;
iii) Hydrolyse des Sol-Gel Vorläufers durch Einbringen von Wasser und eines sauren oder basischen Katalysators, gefolgt von einer Teilkondensationsreaktion, um eine Sol-Gel-Zusammensetzung SG zu erhalten;
iv) Auftragen auf den metallischen Träger mindestens einer Schicht der am Ende von Schritt iii) gewonnenen Sol-Gel-Zusammensetzung;
v) eventuell Trocknen der Schicht bei einer Temperatur, die zwischen 40 und 90 °C liegt; und
vi) Brennen des am Ende von Schritt iv) oder v) beschichteten Artikels bei einer Temperatur, die zwischen 150 °C und 400 °C liegt.

18. Verfahren nach Anspruch 17, wobei die Schicht der in Schritt iv) aufgetragenen Sol-Gel-Zusammensetzung SG eine Stärke in feuchtem Zustand hat, die zwischen 4 und 200 pm, in vorteilhafter Weise zwischen 10 und 140 µm liegt und/oder wobei der Schritt (iv) wiederholt wird, bis man eine Abfolge von Schichten erhält, deren Gesamtstärke in feuchtem Zustand von 20 bis 240 µm beträgt.

19. Verfahren nach Anspruch 17 oder 18, das ferner einen Schritt des Auftragens einer durchgehenden oder nicht durchgehenden Dekorschicht zwischen dem Schritt iv) des Auftragens der Sol-Gel-Zusammensetzung oder gegebenenfalls des Trocknens v) und dem Schritt vi) des Brennens des Artikels umfasst, wobei diesem Auftragen einer Dekorschicht ein Schritt des Trocknens bei einer Temperatur unter 90 °C vor dem abschließenden Brennen vi) des Artikels folgen kann.

## Claims

1. Article comprising a metal support and a ceramic coating applied to said metal support and being in the form of at least a continuous film having a thickness between 2 and 100 pm, said coating comprising a matrix including at least a metal polyalkoxide and wherein particles with a diameter between 0.01 and 50 µm are dispersed, said particles being made of a material having a thermal conductivity of 10 W·m-1·K-1 or higher and a bulk density of at most 3.9 g/cm3, said particles being dispersed in the matrix are selected from diamond particles, cubic boron nitride (CBN) particles, diamond-like carbon (DLC) particles, silicon carbide particles, boron carbide particles, aluminum nitride particles, silicon nitride particles, and mixtures thereof,
**characterized in that** the matrix further comprises at least a reactive or non-reactive silicone oil selected from chlorinated oils, amino oils, (meth)acrylated oils, hydroxylated oils, and anhydride, hydride or vinyl-terminated oils.

2. Article according to claim 1, wherein the constituent material of said particles has a Mohs hardness of 9 or higher.

3. Article according to any one of claims 1 or 2, wherein the metal polyalkoxylate is selected from polyalkoxysilanes, aluminates, titanates, zirconates, vanadates, borates, and mixtures thereof, said metal polyalkoxylate which may further comprise at least a non-functionalized alkyl group.

4. Article according to any one of claims 1 to 3, wherein the continuous film has a thickness between 5 and 70 µm.

5. Article according to one of claims 1 to 4, wherein the diameter of said particles is between 0.05 and 20 pm, advantageously between 0.1 and 5 pm, better still between 0.5 and 3 µm.

6. Article according to one of claims 1 to 5, wherein the dispersed particles represent 0.5 to 8% by weight of said coating, advantageously between 2 and 4% by weight of the total weight of the coating.

7. Article according to any one of claims 1 to 6, wherein the silicone oil represents 0.01 to 2% by weight of said coating, advantageously 0.3 to 2% by weight of the total weight of the coating.

8. Article according to any one of claims 1 to 7, wherein the silicone oil has a dynamic viscosity at 20°C of 0.02 to 0.5 Pa·s.

9. Article according to any one of claims 1 to 8, wherein the matrix further comprises at least a structuring filler and/or at least a pigment.

10. Article according to claim 9, wherein the pigment is selected from coated or uncoated mica, titanium dioxide, mixed oxides of copper-chromium-manganese, copper-chromium, chromium-antimony-titanium, tin-zinc-titanium, spinels, aluminosilicates, iron oxides, carbon black, perylene red, flakes, interference pigments, thermochromic pigments, magnetic or magnetizable pigments, cobalt salts, nickel titanate and mixtures thereof.

11. Article according to claim 9, wherein the structuring filler is selected from:
(i)metal oxides such as alumina, zinc oxide, copper oxide, iron oxide,
(ii) silica,
(iii)zirconia,
(iv) mica,
(v)clays such as montmorillonite, sepiolite, gypsum, kaolinite and laponite,
(vi) zinc peroxide,
(vii) quartz, and
(viii) zirconium phosphate,
these fillers being in the form of powder or of colloidal suspensions.

12. Article according to claim 11, wherein the structuring filler is a powder or a colloidal suspension of alumina or of silica.

13. Article according to any one of claims 1 to 12, comprising at least two layers of said coating, the total thickness of said layers being comprised between 10 and 120 µm.

14. Article according to any one of claims 1 to 13, which is a culinary article, or an iron soleplate, or hair straightening iron plates, or a lid of a household appliance.

15. Article according to claim 14, which is a culinary article comprising a metal support having an inner side able to receive food and an outer side intended to be disposed towards the heat source, and wherein said coating is applied to at least one of said inner and outer sides.

16. Article according to any one of claims 1 to 15, wherein the support is:
- a monolayer structure made of anodized or non-anodized aluminum, or of polished, brushed or microblasted, sandblasted, chemically treated aluminum, or of cast aluminum, or of polished, brushed or microblasted stainless steel, or of cast iron, or of hammered or polished copper; or
- a multilayer structure, in whole or in part, comprising from the outside inwards the following layers stainless steel/aluminum/stainless steel or stainless steel/aluminum/copper/aluminum/stainless steel, or a cast aluminum bowl, of aluminum or aluminum alloys lined with an outer base of stainless steel.

17. Method for manufacturing an article according to any one of claims 1 to 16, said method comprising the following steps:
i) optionally, a surface treatment of said metal support to improve the adhesion of the sol-gel layer applied in step iv);
ii) preparation of a sol-gel composition with:
at least a sol-gel precursor selected from metal alkoxides,
at least particles having a diameter between 0.01 and 50 µm and being made of a material having a thermal conductivity of 10 W·m-1·K-1 or higher and a bulk density of at most 3.9 g/cm3, and preferably a Mohs hardness of 9 or higher, said particles being dispersed in the matrix are selected from diamond particles, cubic boron nitride (CBN) particles, diamond-like carbon (DLC) particles, silicon carbide particles, boron carbide particles, aluminum nitride particles, silicon nitride particles, and mixtures thereof,
(a) at least a reactive or non-reactive silicone oil selected from chlorinated oils, amino oils, (meth)acrylated oils, hydroxylated oils, and anhydride, hydride or vinyl-terminated oils and
optionally (b) at least a structuring filler and/or (c) at least a pigment;
iii) hydrolysis of said sol-gel precursor by introducing water and an acid or base catalyst, followed by a partial condensation reaction to obtain a sol-gel composition SG;
iv) application on said metal support of at least a layer of said sol-gel composition SG resulting from step iii);
v) optionally drying of said layer at a temperature between 40 and 90°C; and
vi) curing said coated article from step iv) or v) at a temperature between 150°C and 400°C.

18. Method according to claim 17 wherein the layer of sol-gel composition SG applied in step iv) has a wet thickness of between 4 and 200 pm, advantageously between 10 and 140 µm and/or wherein step iv) is repeated until a succession of layers is obtained whose total wet thickness is 20 to 240 µm.

19. Method according to claim 17 or 18, which further comprises a step of applying a continuous or discontinuous layer of decoration, between the step iv) of applying the sol-gel composition or, if need be, of drying v), and the step vi) of curing the article, which application of a layer of decoration may be followed by a drying step at a temperature below 90°C preceding the final curing vi) of the article.
